# EUROPÄISCHE PATENTSCHRIFT

(11) **EP 0 921 045 B1**
(45) Veröffentlichungstag und Bekanntmachung des Hinweises auf die Patenterteilung: **24.09.2003**
(21) Anmeldenummer: 98122550.1
(22) Anmeldetag: 02.12.1998
(51) Int. Cl.: B60R 21/26

(54) **Gassack-Modul für ein Fahrzeuginsassen-Rückhaltesystem**
Airbag module for a vehicle passenger restraining system
Module de coussin gonflable pour un système de retenue de passager d'un véhicule

(30) Priorität: 08.12.1997 DE 29721643 U
(43) Veröffentlichungstag der Anmeldung: 09.06.1999
(73) Patentinhaber: TRW Occupant Restraint Systems GmbH & Co. KG, 73551 Alfdorf (DE)
(72) Erfinder: Lutz, Joachim, 73579 Schechingen (DE)
(74) Vertreter: Kitzhofer, Thomas, Dipl.-Ing.

(56) Entgegenhaltungen:
- DE-A- 2 360 315
- DE-A- 4 342 492
- US-A- 5 564 742
- PATENT ABSTRACTS OF JAPAN vol. 018, no. 453 (M-1662), 24. August 1994 (1994-08-24) & JP 06 144137 A (NISSAN MOTOR CO LTD), 24. Mai 1994 (1994-05-24)

## Beschreibung

Die Erfindung betrifft ein Gassack-Modul für ein Fahrzeuginsassen-Rückhaltesystem, mit einem Modulgehäuse, einer Abdeckung, einem Gassack und einem Gasgenerator, wobei die Abdeckung im Rückhaltefall geöffnet wird und sich der Gassack durch die entstehende Öffnung hindurch entfaltet.

Bei bislang üblichen Gassack-Modulen wird die Abdeckung durch den sich entfaltenden Gassack aufgerissen und anschließend nach außen geklappt. Vor dem Aufreißen entsteht jedoch im Inneren des Gassacks ein enormer Druck, der das Gassackgewebe beansprucht. Zudem ist dieser hohe Innendruck nachteilig für den anschließenden Entfaltungsvorgang.

Aus der DE-A-23 60 315 ist ein Gassack-Modul für ein Fahrzeuginsassen-Rückhaltesystem bekannt, mit einem Modulgehäuse, einer Abdeckung, einem Gassack und einem Gasgenerator mit einem Deckel. Die Abdeckung wird im Rückhaltefall durch den sich verschiebenden Deckel geöffnet, der eine Einrichtung zum Öffnen der Abdeckung bildet. Nach dem Öffnen der Abdeckung kann sich der Gassack durch die entstehende Öffnung hindurch entfalten. Durch die Öffnungen im Deckel strömt jedoch sofort, noch vor der Zerstörung der Abdeckung, Gas in den Gassack. Der Gasgenerator ist hierbei selbst wenigstens Teil der Einrichtung zum öffnender Abdeckung und ändert auf seine Aktivierung hin seine Außengeometrie. Durch diese Änderung wird die Abdeckung geöffnet.

Das erfindungsgemäße Gassack-Modul reduziert die Belastung des Gassacks vor dem eigentlichen Entfaltungsvorgang und verbessert dadurch die Vorbestimmbarkeit des Entfaltungsvorgangs selbst. Dies wird durch ein Gassack-Modul nach Anspruch 1 erreicht. Vorzugsweise ist die Einrichtung so ausgebildet, daß erst bei vollständig geöffneter Abdeckung Gas in den Gassack einströmen kann. Damit bleibt der Gassack drucklos, solange die Abdeckung geschlossen ist. Der Widerstand der Abdeckung zu ihrem Aufreißen und Öffnen hat keinen Einfluß auf die Gassackentfaltung. Das Entfalten des Gassacks selbst erfolgt damit wesentlich leichter und schneller als bei bekannten Gassäcken. Dadurch ergibt sich auch eine geringere thermische Belastung des Gassackgewebes beim Entfaltungsvorgang.

Erfindungsgemäß ist der Gasgenerator selbst wenigstens Teil der Einrichtung zum Öffnen der Abdeckung. Dabei kann das Gehäuse des Gasgenerators insgesamt seine Lage bei Aktivierung des Gasgenerators verändern. Durch die Lageänderung wird dann die Öffnung der Abdeckung unmittelbar oder mittelbar hervorgerufen. Dabei kann die Bewegung des Abschnittes unmittelbar auf die Abdeckung oder mittelbar über mit der Abdeckung verbundene Halteteile zur Öffnung derselben übertragen werden. Es ist möglich, daß sich der Gasgenerator insgesamt auf seine Aktivierung hin durch den Rückstoß, der durch aus dem Gasgenerator austretendes Gas hervorgerufen wird, verschiebt. Durch die Verschiebung wird dann die Abdeckung geöffnet.

Die Verschiebung kann zur Abdeckung hin oder von ihr weg erfolgen.

Alternativ kann der Gasgenerator auf seine Aktivierung hin seine Außengeometrie verändern. Durch diese Änderung der Geometrie wird dann die Abdeckung geöffnet. Die Änderung der Außengeometrie kann einerseits beispielsweise durch ein teilweises Ausdehnen des Außengehäuses erfolgen oder andererseits durch eine Bewegung von zueinander verschiebbaren Gehäuseteilen, die das Außengehäuse bilden. Diese Verschiebung der Gehäuseteile erfolgt aufgrund des Innendrucks im Außengehäuse des Gasgenerators.

Gemäß einer Ausgestaltung ist eine Einrichtung vorgesehen, die den Gasstrom zum Gassack absperrt, bis die Abdeckung geöffnet ist. Diese Einrichtung kann als separate Einrichtung ausgebildet oder auch mit der Einrichtung zum Öffnen der Abdeckung kombiniert sein.

Ein Aspekt der Erfindung besteht demnach darin, daß der Strömungsweg des im Gasgenerator erzeugten Gases in den Gassack nicht sofort freigegeben wird, sondern der Gasgeneratorinnendruck ausgenutzt wird, um zuerst die Abdeckung zu öffnen.

Sind mehrere zueinander bewegbare Gehäuseteile vorgesehen, werden diese vorzugsweise bei Aktivierung durch den Innendruck auseinandergeschoben. Die Gehäuseteile wirken entweder unmittelbar oder mittelbar auf die Abdeckung. Die Verschiebung der Gehäuseteile kann zur Freigabe des Gasstroms zum Entfalten des Gassacks führen. Beispielsweise können die Gehäuseteile ein Ventil bilden oder mit einem Ventil verbunden sein, das erst bei Erreichen eines bestimmten Verstellweges ein Einströmen des Gases in den Gassack erlaubt.

Eines der verschiebbaren Gehäuseteile ist vorzugsweise als Diffusorklappe ausgebildet. Die Diffusorklappe wird gemäß einer Ausführungsform zur Abdeckung hinbewegt, um die Abdeckung zu öffnen. Die Diffusorklappe ist anschließend von der Abdeckung weg, in das Modul hinein verschiebbar. Dadurch kann bei einem Sekundäraufprall eines Fahrzeuginsassen auf das Außengehäuse des Gasgenerators sich die Diffusorklappe verschieben und damit das Verletzungsrisiko reduzieren.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 einen Längsschnitt durch eine erste Ausführungsform des erfindungsgemäßen Gassack-Moduls bei geschlossener Abdeckung,
Figur 2 das in Figur 1 gezeigte Modul zu Beginn des Entfaltungsvorgangs bei geöffneter Abdeckung,
Figur 3 eine Längsschnittansicht durch eine zweite Ausführungsform des erfindungsgemäßen Gassack-Moduls mit geschlossener Abdeckung, und
Figur 4 das in Figur 3 gezeigte Modul zu Beginn des Entfaltungsvorgangs bei sich öffnender Abdeckung.

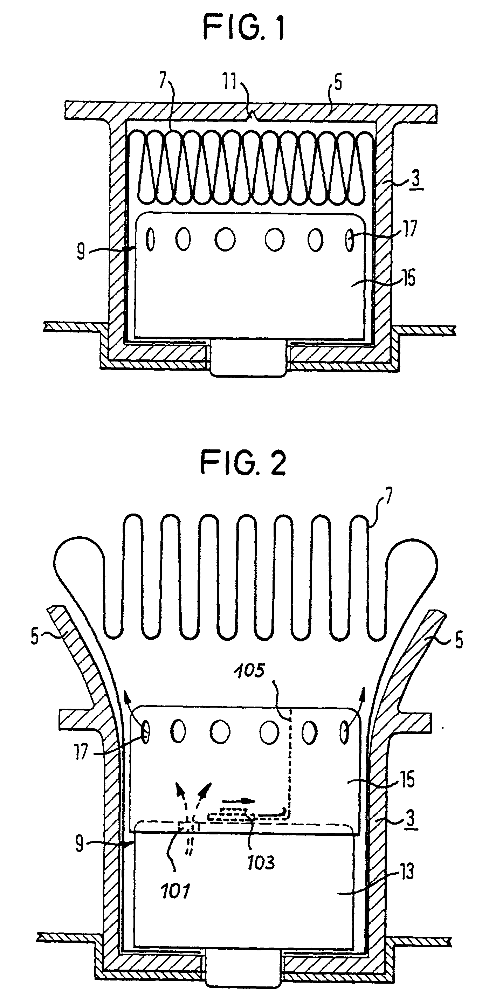

In Figur 1 ist ein Gassack-Modul gezeigt, das in der Nabe eines Fahrzeuglenkrads untergebracht ist. Das Gassack-Modul weist ein topfförmiges Modulgehäuse 3 auf, das durch eine an ihm befestigte Abdeckung 5 geschlossen ist. Im Inneren des Modulgehäuses 3 ist ein gefalteter Gassack 7 untergebracht, in dem ein Gasgenerator 9 angeordnet ist. Die Abdeckung 5 weist eine durch eine Einschnürung 11 gebildete Sollbruchstelle auf.

Der Gasgenerator 9 hat ein Außengehäuse, welches aus mehreren Gehäuseteilen besteht, die teleskopartig ineinandergesteckt sind. Ein erstes, topfförmiges Gehäuseteil 13 bildet ein Unterteil des Außengehäuses, und ein auf das erste Gehäuseteil 13 aufgestecktes zweites topfförmiges Gehäuseteil 15 bildet ein Oberteil. Das zweite Gehäuseteil 15 ist dabei als eine Diffusorkappe ausgebildet und hat an ihrem Umfang im Bereich des oberen Endes zahlreiche Gasauslaßöffnungen 17. Nicht gezeigt ist ein im Inneren des Gasgenerators 9 angeordneter Treibsatz.

Im Rückhaltefall wird dieser Treibsatz gezündet, und durch das entstehende Gas wird ein hoher Innendruck im Außengehäuse des Gasgenerators 9 geschaffen. Das Gas kann jedoch nicht ausströmen. Im Inneren des Außengehäuses ist nämlich eine mit dem ersten Gehäuseteil 13 verbundene Trennwand (obere Stirnwand des zylindrischen Gehäuses) vorgesehen, die Durchströmöffnungen hat, von denen nur die Öffnung 101 dargestellt ist. Die Durchströmöffnungen sind aber durch einen Schieber 103, der mit dem zweiten Gehäuseteil 15 über ein Seil 105 verbunden ist, in der in Figur 1 gezeigten Stellung geschlossen. Der Innendruck im Außengehäuse führt dazu, daß das zweite Gehäuseteil 15 nach oben verschoben wird, gegen den Gassack 7 drückt und dadurch zum Reißen und Öffnen der Abdeckung 5 führt. Erst wenn ein bestimmter Verstellweg erreicht wird, gibt der Schieber 103 die Durchströmöffnungen 101 in der Trennwand frei, indem er nach rechts verschoben wird. Dann kann Gas über die Öffnungen 17 in den Gassack 7 einströmen und diesen, wie in Figur 2 gezeigt, entfalten. Der so gestaltete Gasgenerator bildet eine Einrichtung zum Öffnen der Abdeckung und, in seinem Inneren durch das gebildete Schieberventil, eine Einrichtung, die den Gasstrom absperrt, bis die Abdeckung 5 geöffnet ist. Das Schieberventil ist an die Bewegung der Gehäuseteile 13, 15 zueinander gekoppelt. Diese Koppelung kann so erfolgen, daß erst bei vollständig geöffneter Abdeckung 5 Gas in das Innere des Gassacks 7 einströmen kann oder bereits kurz nach Aufreißen der Abdeckung 5. In letzterem Fall trägt dann der sich entfaltende Gassack 7 noch etwas zur Bewegung der aufgerissenen Abdeckung 5 nach außen bei. Der Widerstand, den die Abdeckung in diesem Fall dem Entfaltungsvorgang entgegengesetzt, ist jedoch relativ gering verglichen mit dem Widerstand, den die noch nicht aufgerissene Abdeckung 5 dem Entfaltungshergang des Gassacks entgegensetzen würde.

Durch das so ausgebildete Gassack-Modul ist der Gassack 7 so lange drucklos, bis die Abdeckung 5 geöffnet oder vollständig offen ist. Der Aufreißwiderstand der Abdeckung sowie deren Massenträgheit beim Öffnen haben keinen negativen Einfluß auf die Gassackentfaltung. Damit kann sich der Gassack leicht, relativ exakt vorbestimmbar und schnell entfalten.

Das radiale Einströmen des Druckgases wird durch die hochstehende Diffusorkappe in Form des zweiten Gehäuseteils 15 erreicht. Bei einem Sekundäraufprall oder, wenn der Insasse den aufgeblasenen Gassack 7 durchschlagen sollte, läßt sich das zweite Gehäuseteil 15 gedämpft wieder tiefer in das Modul, auf das erste Gehäuseteil 13 aufschieben, was das Verletzungsrisiko reduziert.

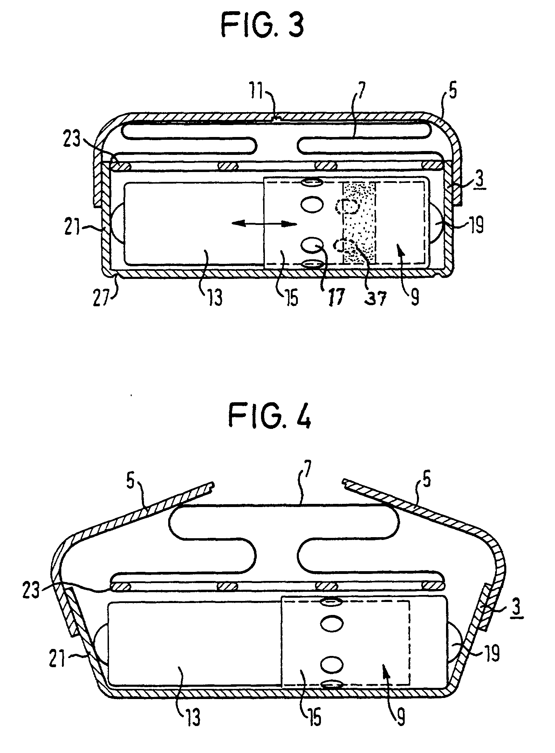

Bei der in Figur 3 gezeigten Ausführungsform ist der Gasgenerator 9 als Rohrgasgenerator ausgebildet. Bei dieser Ausführungsform ist der Gasgenerator 9 jedoch außerhalb des Gassacks 7 angeordnet. Das Außengehäuse hat stirnseitig jeweils einen gewölbten Fortsatz 19, der an der Innenseite der Seitenwandungen 21 des Modulgehäuses 3 anliegt. Ein Haltering 23 mit Durchströmöffnungen dient der Befestigung des Gassacks 7 im Modul. Die Wandungen 21 dienen als Halteteile für die gewölbt ausgeführte Abdeckung 5. Einschnürungen 27 am Übergang zwischen dem Boden des Modulgehäuses 3 und den Seitenwandungen 21 dienen als Scharniere.

Im Rückhaltefall wird über das erzeugte Gas ein hoher Innendruck im Generator erzeugt, der zum Auseinanderschieben der Gehäuseteile 13, 15 führt. Dadurch wird die Abdeckung 5 geöffnet und samt den Halteteilen nach außen geschwenkt, wie in Figur 4 gezeigt ist. Die Mantelfläche des ersten Gehäuseteils 13 hat Öffnungen 37, die erst beim Auseinanderschieben der Gehäuseteile 13, 15 mit den Ausströmöffnungen 17 fluchten. Die Gehäuseteile 13, 15 bilden ein Ventil. Wenn die Abdeckung 5 geöffnet ist und die gebildeten Segmente der Abdeckung um einen gewissen Winkel verschwenkt sind, wird der Strömungsweg des Gases freigegeben, so daß es in den Gassack 7 einströmen kann und diesen entfaltet. Der sich entfaltende Gassack 7 öffnet die Abdeckung 5 anschließend weit, ohne daß dem Öffnen ein großer Widerstand entgegengesetzt wird.

## Patentansprüche

1. Gassack-Modul für ein Fahrzeuginsassen-Rückhaltesystem, mit einem Modulgehäuse (3), einer Abdeckung (5), einem Gassack (7) und einem Gasgenerator (9), wobei die Abdeckung (5) im Rückhaltefall geöffnet wird und sich der Gassack (7) durch die entstehende Öffnung hindurch entfaltet, mit wenigstens einer Einrichtung zum Öffnen der Abdeckung (5), die die Abdeckung (5) noch vor dem Einströmen von Gas in den Gassack (7) öffnet, wobei der Gasgenerator (9) selbst wenigstens Teil der Einrichtung zum Öffnen der Abdeckung (5) ist und sich insgesamt auf seine Aktivierung hin verschiebt oder seine Außengeometrie ändert und durch die Verschiebung oder Änderung die Abdeckung (5) geöffnet wird.

2. Gassack-Modul nach Anspruch 1, **dadurch gekennzeichnet, daß** die Einrichtung zudem den Gasstrom zum Gassack (7) absperrt, bis die Abdeckung geöffnet, insbesondere vollständig geöffnet ist.

3. Gassack-Modul nach Anspruch 1, **dadurch gekennzeichnet, daß** eine weitere Einrichtung vorgesehen ist, die den Gasstrom zum Gassack (7) absperrt, bis die Abdeckung (5) geöffnet, insbesondere vollständig geöffnet ist.

4. Gassack-Modul nach einem der vorhergehenden Ansprüche, **dadurch gekennzeichnet, daß** sich der Gasgenerator (9) insgesamt verschiebt und die Verschiebung durch am Gasgenerator (9) austretendes Gas hervorgerufen wird.

5. Gassack-Modul nach einem der vorhergehenden Ansprüche, **dadurch gekennzeichnet, daß** sich der Gasgenerator (9) insgesamt verschiebt und sich auf seine Aktivierung hin zur Abdeckung (5) hin oder von ihr weg bewegt.

6. Gassack-Modul nach einem der Ansprüche 1 bis 3, **dadurch gekennzeichnet, daß** der Gasgenerator (9) auf seine Aktivierung hin seine Außengeometrie verändert, indem sich das Außengehäuse des Gasgenerators (9) bei Aktivierung wenigstens teilweise ausdehnt.

7. Gassack-Modul nach Anspruch 6, **dadurch gekennzeichnet, daß** das Außengehäuse aus mehreren zueinander verschiebbaren Gehäuseteilen (13, 15) besteht und durch eine Verschiebung aufgrund des bei Aktivierung entstehenden Innendrucks im Außengehäuse die Abdeckung geöffnet wird.

8. Gassack-Modul nach Anspruch 7, **dadurch gekennzeichnet, daß** zwei topfförmige Gehäuseteile (13, 15) ineinandergesteckt sind und sich bei Aktivierung auseinanderschieben.

9. Gassack-Modul nach Anspruch 7 oder 8, **dadurch gekennzeichnet, daß** die Verschiebung zur Abdeckung (5) hin oder seitlich zur Abdeckung (5) erfolgt.

10. Gassack-Modul nach einem der Ansprüche 7 bis 9, **dadurch gekennzeichnet, daß** die Verschiebung der Gehäuseteile (13, 15) relativ zueinander den Weg des Gasstroms in den Gassack (7) freigibt.

11. Gassack-Modul nach einem der Ansprüche 7 bis 10, **dadurch gekennzeichnet, daß** die zueinander verschiebbaren Gehäuseteile (13, 15) ein Ventil für das erzeugte Gas bilden oder mit einem Ventil für das erzeugte Gas verbunden sind, wobei das Ventil nach einem bestimmten Verstellweg der Gehäuseteile (13, 15) zueinander ein Einströmen von Gas in den Gassack (7) erlaubt.

12. Gassack-Modul nach einem der Ansprüche 7 bis 11, **dadurch gekennzeichnet, daß** eines der verschiebbaren Gehäuseteile (15) als Diffüsorkappe ausgebildet ist.

13. Gassack-Modul nach Anspruch 12, **dadurch gekennzeichnet, daß** die Diffüsorkappe zur Abdeckung hin und bei Einwirken einer Kraft entgegen dieser Bewegungsrichtung zurück in Richtung des anderen Gehäuseteils (13) verschoben werden kann.

## Claims

1. A gas bag module for a vehicle occupant restraint system, comprising a module housing (3), a covering (5), a gas bag (7) and a gas generator (9), the covering (5) being opened in a case of restraint and the gas bag (7) unfolding through the resulting opening, including at least one device for opening the covering (5) which opens the covering (5) even before the inflow of gas into the gas bag (7), the gas generator (9) itself being at least part of the device for opening the covering (5) and, upon its activation, being displaced as a whole or changing its outer geometry, and the covering (5) being opened as a result of the displacement or change.

2. The gas bag module according to Claim 1, **characterized in that** the device additionally shuts off the gas flow to the gas bag (7) until the covering is opened, more particularly completely opened.

3. The gas bag module according to Claim 1, **characterized in that** a further device is provided which shuts off the gas flow to the gas bag (7) until the covering (5) is opened, more particularly completely opened.

4. The gas bag module according to any of the preceding claims, **characterized in that** the gas generator (9) is displaced as a whole and the displacement is caused by gas emerging at the gas generator (9).

5. The gas bag module according to any of the preceding claims, **characterized in that** the gas generator (9) is displaced as a whole and, upon its activation, moves towards or away from the covering (5).

6. The gas bag module according to any of claims 1 to 3, **characterized in that** the gas generator (9), upon its activation, changes its outer geometry by the outer housing of the gas generator (9) expanding at least partially on activation.

7. The gas bag module according to Claim 6, **characterized in that** the outer housing consists of several housing parts (13, 15) which are displaceable in relation to each other and that the covering is opened as a result of a displacement owing to the internal pressure in the outer housing arising on activation.

8. The gas bag module according to Claim 7, **characterized in that** two cup-shaped housing parts (13, 15) are placed one into the other and move apart on activation.

9. The gas bag module according to Claim 7 or 8, **characterized in that** the displacement takes place towards the covering (5) or laterally to the covering (5).

10. The gas bag module according to any of Claims 7 to 9, **characterized in that** the displacement of the housing parts (13, 15) relative to each other opens the path of the gas flow into the gas bag (7).

11. The gas bag module according to any of Claims 7 to 10, **characterized in that** the housing parts (13, 15) which are displaceable in relation to each other form a valve for the gas produced or are connected with a valve for the gas produced, the valve permitting an inflow of gas into the gas bag (7) after a predetermined shift length of the housing parts (13, 15) relative to each other.

12. The gas bag module according to any of Claims 7 to 11, **characterized in that** one of the displaceable housing parts (15) is constructed as a diffuser cap.

13. The gas bag module according to Claim 12, **characterized in that** the diffuser cap can be displaced towards the covering and, when a force acts contrary to this direction of movement, can be displaced back towards the other housing part (13).

## Revendications

1. Module de coussin à gaz pour un système de retenue des occupants d'un véhicule, comportant un boîtier de module (3), un couvercle (5), un coussin à gaz (7) et un générateur de gaz (9), le couvercle (5) s'ouvrant en cas de retenue et le coussin à gaz (7) se déployant à travers l'ouverture formée, comportant au moins un dispositif d'ouverture du couvercle (5) qui ouvre le couvercle (5) encore avant l'écoulement de gaz dans le coussin à gaz (7), le générateur de gaz (9) faisant lui-même au moins partie du dispositif d'ouverture du couvercle (5) et, après avoir été activé, se déplaçant en entier ou modifiant sa géométrie extérieure, et le couvercle (5) s'ouvrant à la suite du déplacement ou de la modification.

2. Module de coussin à gaz selon la revendication 1, **caractérisé en ce que** le dispositif stoppe en outre le flux de gaz vers le coussin à gaz (7) jusqu'à ce que le couvercle soit ouvert, en particulier complètement ouvert.

3. Module de coussin à gaz selon la revendication 1, **caractérisé en ce qu'**il est prévu un autre dispositif qui stoppe le flux de gaz vers le coussin à gaz (7) jusqu'à ce que le couvercle soit ouvert, en particulier complètement ouvert.

4. Modulé de coussin à gaz selon l'une des revendications précédentes, **caractérisé en ce que** le générateur de gaz (9) se déplace dans l'ensemble et le déplacement est provoqué par du gaz sortant au niveau du générateur de gaz (7).

5. Module de coussin à gaz selon l'une des revendications précédentes, **caractérisé en ce que** le générateur de gaz (9) se déplace dans l'ensemble et, après avoir été activé, il se déplace vers le couvercle (5) ou en éloignement de celui-ci.

6. Module de coussin à gaz selon l'une des revendications 1 à 3, **caractérisé en ce qu'**après avoir été activé, le générateur de gaz (9) modifie sa géométrie extérieure par le fait qu'à l'activation, le boîtier extérieur du générateur de gaz (9) se dilate au moins partiellement.

7. Module de coussin à gaz selon la revendication 6, **caractérisé en ce que** le boîtier extérieur est constitué par plusieurs parties de boîtier (13, 15) déplaçables l'une par rapport à l'autre, et **en ce que** le couvercle s'ouvre par un déplacement en raison de la pression intérieure se produisant dans le boîtier extérieur lors de l'activation.

8. Module de coussin à gaz selon la revendication 7, **caractérisé en ce que** deux parties de boîtier (13, 15) en forme de pot sont emboîtées l'une dans l'autre et se séparent lors de l'activation.

9. Module de coussin à gaz selon la revendication 7 ou 8, **caractérisé en ce que** le déplacement a lieu vers le couvercle (5) ou latéralement au couvercle (5).

10. Module de coussin à gaz selon l'une des revendications 7 à 9, **caractérisé en ce que** le déplacement des parties de boîtier (13, 15) l'une par rapport à l'autre libère la voie du flux de gaz dans le coussin à gaz (7).

11. Module de coussin à gaz selon l'une des revendications 7 à 10, **caractérisé en ce que** les parties de boîtier (13, 15) déplaçables l'une par rapport à l'autre forment une valve pour le gaz engendré ou sont reliées à une valve pour le gaz engendré, la valve permettant l'écoulement de gaz dans le coussin à gaz (7) après une course de déplacement déterminée des parties de boîtier (13, 15) l'une par rapport à l'autre.

12. Module de coussin à gaz selon l'une des revendications 7 à 11, **caractérisé en ce qu'**une des parties de boîtier (15) déplaçables est réalisée sous forme de capuchon diffuseur.

13. Module de coussin à gaz selon la revendication 12, **caractérisé en ce que** le capuchon diffuseur peut être déplacé vers le couvercle et, lorsqu'une force agit à l'encontre de cette direction de mouvement, il peut être ramené en direction de l'autre partie de boîtier (13).
